# EUROPEAN PATENT SPECIFICATION

(11) **EP 1 816 026 B1**
(45) Date of publication and mention of the grant of the patent: **03.12.2008**
(21) Application number: 07101231.4
(22) Date of filing: 26.01.2007
(51) Int. Cl.: B60N 2/39

(54) **Agricultural tractor**
Landwirtschaftlicher Traktor
Tracteur agricole

(30) Priority: 01.02.2006 IT UD20060024
(43) Date of publication of application: 08.08.2007
(73) Proprietor: Luisotto, Loris, 31018 Gaiarine (IT)
(72) Inventor: Luisotto, Loris, 31018 Gaiarine (IT)
(74) Representative: Petraz, Gilberto Luigi

(56) References cited:
- WO-A-92/01409
- WO-A-02/064398
- WO-A-03/086941
- US-A- 4 425 863

## Description

### FIELD OF THE INVENTION

The present invention concerns an agricultural tractor advantageously, but not exclusively, able to be used in hilly or mountain areas where the distribution of the ground is characterized by considerable inclinations.

The tractor according to the present invention comes advantageously within the class of self-leveling machines in transverse direction, that is, able to keep the frame, and therefore the driving cabin, substantially horizontal even in the presence of inclinations of the ground that are transverse to the direction of travel.

### BACKGROUND OF THE INVENTION

Agricultural tractors suitable to be used in hilly or mountain areas characterized by considerable inclinations in the ground, for vine-growing, fruit-growing, silviculture or similar activities, are known. For example from WO 02/064398 A as also providing the closest prior art document, and discloses the features of the preamble of independent claims 1 and 11.

These tractors are in general of the self-leveling type in transverse direction, in order to allow greater driving comfort in the presence of transverse inclinations of the ground.

However, the presence of longitudinal inclinations of the ground, that is, those which develop in a direction substantially parallel to the direction of travel, can also cause discomfort to the driver.

In particular, while in up-hill tracts the conformation of the seat, advantageously enveloping, guarantees the necessary support for the driver's body, in down-hill slopes with a great inclination, which can reach even 30-40%, the driver finds himself driving in a position of considerable discomfort and dangerousness.

Some tractors provide to use driving cabins or driver's places with a variable position, able to adapt to the longitudinal inclination of the ground, in order to improve the driving comfort even in the presence of steep downward slopes.

These tractors, however, adopt technical solutions that imply an increase in the overall bulk of the tractor, which therefore cannot have the compactness normally required for use in hilly or mountain areas.

Another disadvantage of known tractors of the self-leveling type is that, in the presence of transverse inclinations, maintaining the frame in a substantially horizontal position entails a positioning of the tools connected thereto (scything bars, shredders, milling cutters, etc.) that is not parallel to the ground, with a consequent loss of effectiveness or deformity of the work carried out with said tools.

One purpose of the invention is to achieve an agricultural tractor that is sufficiently compact to be used in hilly or mountain areas, for vine-growing, fruit-growing, silviculture or similar operations, and that allows the driver an adequate driving comfort in the presence of transverse and/or longitudinal inclinations of the ground.

Another purpose of the invention is to achieve an agricultural tractor of the above type which allows to maintain the tools in a position substantially parallel to the ground, even in the presence of transverse inclinations thereof.

The Applicant has devised and embodied the present invention to overcome the shortcomings of the state of the art, in order to achieve these purposes and obtain other advantages.

### SUMMARY OF THE INVENTION

The present invention is set forth and characterized essentially in the main claims, while the dependent claims describe other innovative characteristics of the invention.

In accordance with the above purposes, the agricultural tractor according to the present invention, advantageously of the self-leveling type in a transverse direction, comprises a reclining driving seat disposed inside a containing structure mounted on the frame of the tractor itself.

The driver's place comprises at least a seat and a footboard and is associated with actuation means able to make it selectively assume at least a first position, in substantial absence of a longitudinal inclination of the ground, and a second position, raised and inclined backwards with respect to said first position, to compensate the longitudinal inclination of the ground in the presence of a downward slope.

Advantageously, the actuation means comprises at least a fluid-dynamic piston and is driven automatically by command and control means, governed by means to measure the inclination, able to determine the angle of rotation to be assumed by the driver's place as a function of the entity of the longitudinal inclination to be compensated.

According to the invention, the passage of the driver's place from the first to the second position, and vice versa, determines a relative movement between the seat and the footboard, so that the driver's place does not interfere with the containing structure inside which it is inserted.

The containing structure, and therefore the entire tractor, can thus remain of limited size, so that the tractor itself is suitable for use even in hilly or mountain areas where space for maneuvering is restricted.

In a preferential form of embodiment, the seat is fixed on a platform pivoted in correspondence with a first fulcrum, while the footboard is associated with connection means pivoted in correspondence with at least a second fulcrum, in such a manner that both can rotate, according to pivoting axes different and parallel one to the other, with respect to the containing structure.

The connection means also defines guides for sliding means associated with said platform and able to allow the relative movement between the seat and the footboard.

According to another characteristic of the present invention, the tool-bearing tractor comprises at least a lifting unit provided with a support associated with an attachment member for work tools; said attachment member is mounted on rotating means, such as for example a fifth wheel, associated with the support and with a substantially horizontal axis of rotation in the absence of a longitudinal inclination of the ground.

The lifting unit also comprises selectively activated displacement means, able to determine the rotation of the attachment member with respect to the support, and around the axis of rotation of said rotating means, in the presence of a transverse inclination of the ground, in order to maintain the working tools substantially parallel to the ground itself.

Advantageously, the displacement means comprises at least a fluid-dynamic piston and is driven automatically by command and control means, governed by means to measure the inclination, able to determine the angle and the direction of rotation of the attachment member, with respect to the vertical plane passing through the axis of rotation of the rotating means, according to the entity and direction of the transverse inclination of the ground.

### BRIEF DESCRIPTION OF THE DRAWINGS

These and other characteristics of the present invention will become apparent from the following description of a preferential form of embodiment, given as a non-restrictive example with reference to the attached drawings wherein:

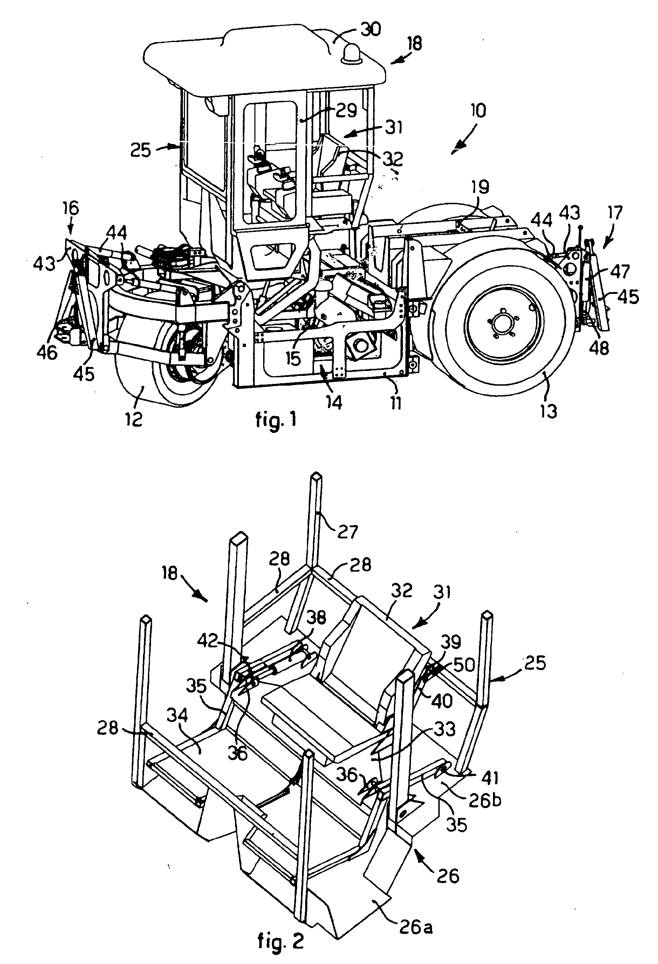

- fig. 1 is a three-dimensional view of an agricultural tractor according to the present invention;
- fig. 2 is a three-dimensional view of part of the driving cabin of the agricultural tractor in fig. 1;
- fig. 3 is a side view of the part of the driving cabin in fig. 2;
- fig. 4 is a three-dimensional view of the seat of the driving cabin in fig. 2;
- fig. 5 is a three-dimensional view of the footboard of the driving cabin in fig. 2;
- fig. 6 is a partial three-dimensional view of a rear part of the agricultural tractor in fig. 1;
- fig. 7 is a three-dimensional view of a detail of fig. 6;
- fig. 8 is a three-dimensional view of another detail of fig. 6;
- figs. 9a and 9b are two front views of the detail of fig. 7 in two different conditions of use of the agricultural tractor according to the present invention.

### DETAILED DESCRIPTION OF A PREFERENTIAL FORM OF EMBODIMENT

With reference to the attached drawings, number 10 denotes in its entirety an agricultural tractor according to the present invention, which comprises a frame 11 associated with a front driving wheel 12 and two back leveling wheels 13.

Between the front wheel 12 and the back wheels 13 a compartment 14 is made for a motor 15, which, as well as determining the movement of the tractor 10, allows to drive a front lifting unit 16 and a back lifting unit 17, both of the hydraulic type, with which the work tools are able to be associated.

On the frame 11, in the part disposed above the axle of the back wheels 13, an attachment 19 is also present for containers such as tanks, boxes or suchlike.

Above the compartment 14 for the motor 15 there is a driving cabin 18 able to lift and translate slightly forward to facilitate access to the motor 15, to allow a better view for the driver in certain situations, and also to enable the use of bigger containing equipment.

Advantageously, the tractor 10 is of the transversely self-leveling type and with variable rear gauge.

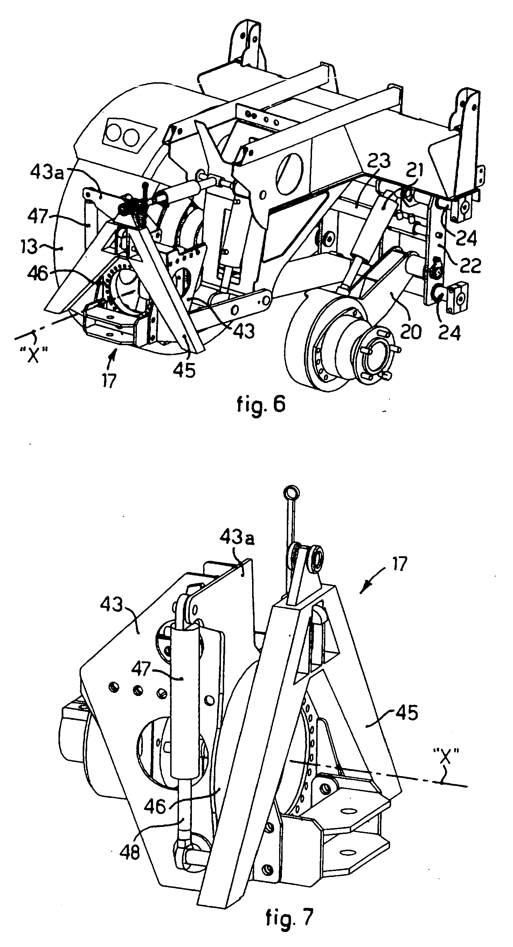

As can be seen in fig. 6, where the right back wheel and its relative mudguard have been omitted for greater clarity of representation, the arms 20 of the suspensions of the back wheels 13 are associated with respective leveling pistons 21, of a substantially known type, the automatic and independent drive of which is commanded by a central unit governed by an inclinometer of the tractor 10.

The automatic drive of the leveling pistons 21 allows the back wheels to follow the profile of the ground even in the presence of considerable transverse inclinations, in any case maintaining the frame 11, and therefore the driving cabin 18, in a substantially horizontal position in order to guarantee suitable driving comfort for the driver.

Each arm 20 is also constrained, with the possibility to oscillate, to a respective slider 22 able to slide on transverse bars 24, parallel to the axis of rotation of the back wheels 13, due to the drive of a relative translation piston 23, allowing, when there is sufficient space for transit, to vary the distance between the two back wheels 12, that is, the rear gauge, and therefore to increase the perimeter of the tractor 10 in contact with the ground, in order to improve the stability thereof.

In a possible form of embodiment, the rear gauge can be widened by about 480-500 mm, with an increase of at least 34-35% with respect to the situation in which the sliders 22 are completely retracted.

The driving cabin 18 comprises a containing structure 25, defined by a platform 26 and a plurality of uprights 27 and cross-pieces 28, with which the door 29 and the roof 30 of the driving cabin 18 are associated.

The platform 26 has a stepped profile and defines two substantially horizontal surfaces, of which a first surface 26a is disposed at a lower level with respect to a second surface 26b.

Inside the containing structure 25 a driver's place 31 of the reclining type is also constrained, comprising a seat 32, a supporting platform for said seat 32, a footboard 34, on which the control pedals of the tractor 10 are advantageously disposed, and two connecting arms 35.

The seat 32 is attached to the platform 33, which is pivoted, by way of a plate 40, in correspondence with a first fulcrum 39, obtained on a fin 50 attached to a crosspiece 28 disposed behind the seat 32 itself.

On the platform 33, at the sides of the seat 32, there are two attachments 36 outside of which corresponding rollers 37 are mounted.

On one of the attachments 36 one end of a lifting piston 38 is constrained, the other end of which is pivoted on the second surface 26b of the platform 26.

The connecting arms 35, with the lower part of which the footboard 34 is associated, have an angular configuration correlated to the profile of the platform 26 and are pivoted, at the sides of the seat 32, on the second surface 26b of the platform 26, in correspondence with second fulcrums 41.

Each connecting arm 35, on its respective internal side, has a guide 42 with an angular section defining a sliding surface facing upwards, along which a relative roller 37 is able to slide.

When the ground is level, or substantially does not have a longitudinal inclination, the driver's place 31 is in a normal position, with the footboard 34 and the platform 33 substantially resting on the first surface 26a and the second surface 26b.

In the presence of a tract of downward slope, the drive of the lifting piston 38, which can occur manually, or automatically by means of a command unit governed by an inclinometer on board the tractor 10, allows to dispose the driver's place 31 in a position rotated backwards and upwards in order to compensate the longitudinal inclination of the ground, guaranteeing greater comfort for the driver, but without compromising the possibility of accessing the commands.

In particular, the drive of the lifting piston 38 determines the lifting and backwards rotation of the platform 33, and hence of the seat 32; the consequent thrust upwards and the sliding of the rollers 37 along the guides 42 determines the lifting with backwards rotation of the footboard 34 and its relative movement with respect to the seat 32.

In this step, the rotation of the platform 33 and of the footboard 34 with respect to two different fulcrums 39 and 41 allows to reduce the overall bulk of the driver's place 31, preventing the footboard 34 from knocking against the containing structure 25.

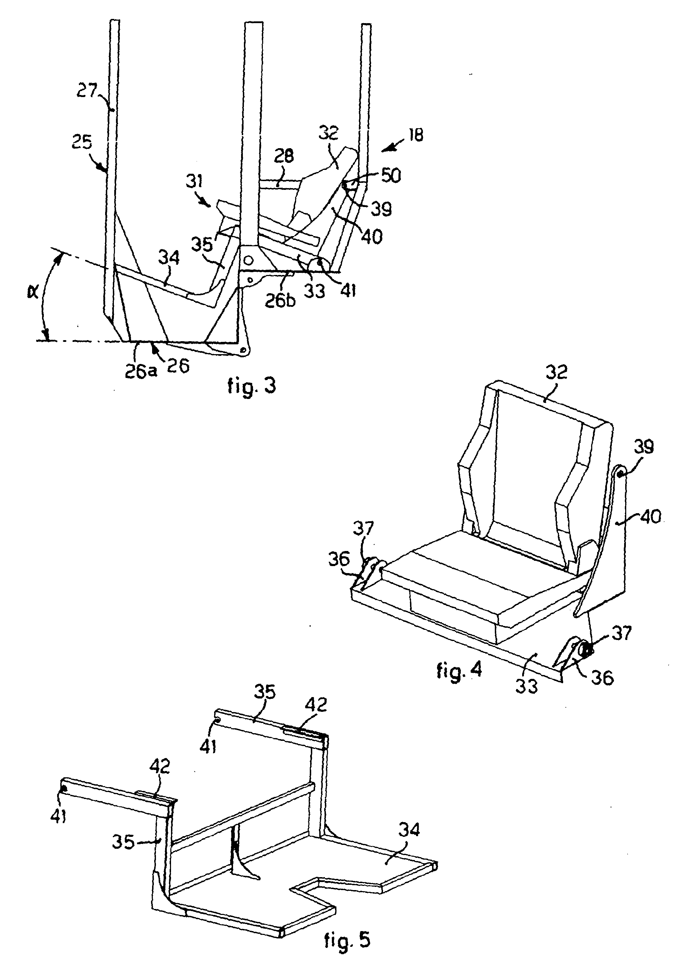

The angle of rotation α of the driver's place 31 can reach at least 20° and therefore allows to compensate downhill inclinations even of 36% or more (fig. 3).

The front lifting unit 16, which in this case is of the removable type, and the back lifting unit 17 have respective supports 43, able to be moved by means of drive pistons 44, with each of which an automatic attachment member 45 is associated, of unified type, of substantially triangular configuration and axially hollow, on which the work tools are able to be associated.

The back lifting unit 17 also comprises a hydraulic motor 49 with a PTO-type bar hold for the take-off of the motive power that drives the work tools.

The automatic attachment member 45 is mounted on a fifth wheel 46, with an axis of rotation "x" substantially horizontal in the absence of a longitudinal inclination of the ground, which allows it to rotate with respect to the support 43.

In the back lifting unit 17, the fifth wheel 46, which is axially hollow, is disposed in axis with the bar hold for the take-off of the motive power, which is therefore accessible through the fifth wheel 46 itself and the automatic attachment member 45.

The automatic attachment member 45 is also connected to the support 43 by means of a rotation piston 47, of hydraulic type, fitted in a misaligned position with respect to the fifth wheel 46.

The end of the shaft 48 of the rotation piston 47 is pivoted, with a substantially horizontal axis of rotation, in correspondence with a lower and lateral point of the automatic attachment member 45, while the other end of the rotation piston 47 is pivoted, again with a horizontal axis of rotation, on a projecting plate 43a of the support 43.

The rotation piston 47 is able to be selectively driven, in automatic manner, by means of a control unit governed by an inclinometer on board the tractor 10, in order to determine a thrust or drawing on the automatic attachment member 45 and make it rotate, around the axis "x", with respect to the support 43.

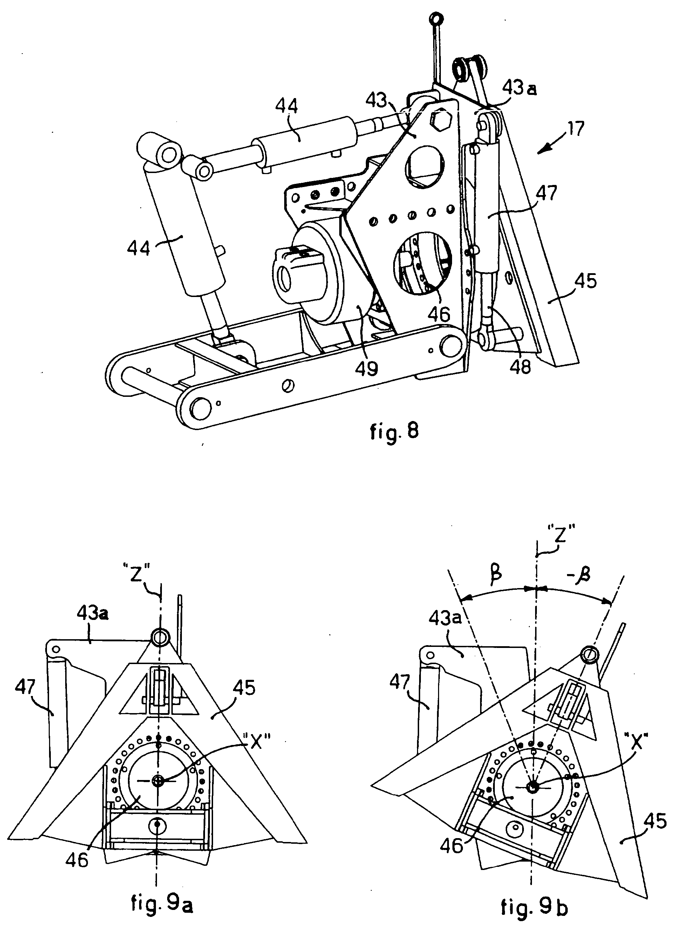

If the ground does not have a transverse inclination, the shaft 48 of the rotation piston 47 is partially extracted and maintains the automatic attachment member 45, and hence the work tool associated with it, in a position substantially horizontal and symmetric with respect to the vertical plane "Z" passing through the axis "x" (fig. 9a).

In the presence of a transverse inclination of the ground, the rotation piston 47 is driven so as to determine an extraction or retraction of the shaft 48 according to the rotation that is to be performed by the automatic attachment member 45 around the axis "x", in order to compensate the transverse inclination of the ground and keep the work tool in use substantially parallel to the ground.

Advantageously, the rotation of the automatic attachment member 45 can occur in either direction for an angle, β or -β, with a value up to at least +/- 22° with respect to the vertical plane Z (fig. 9b).

It is clear, however, that modifications and/or additions of parts may be made to the agricultural tractor 10 as described heretofore, without departing from the field and scope of the present invention.

For example, instead of the lifting piston 38 other devices for moving the driver's place 31 can be present.

Otherwise, the automatic attachment member 45 can be replaced by another attachment able to rotate according to the transverse inclination of the ground.

Furthermore, instead of the pistons 21, 23, 38, 44 and 47, other actuation devices can be provided, of oil-hydraulic, pneumatic, mechanic or electro-mechanic type.

It is also clear that, although the present invention has been described with reference to specific examples, a person of skill in the art shall certainly be able to achieve many other equivalent forms of agricultural tractor, having the characteristics as set forth in the claims and hence all coming within the field of protection defined thereby.

## Claims

1. Agricultural tractor able to operate on grounds with a longitudinal, or transverse, inclination with respect to its direction of travel, comprising a frame (11) and a driver's place (31) having at least a seat (32) and a footboard (34), disposed inside a containing structure (25) mounted on said frame (11), **characterized in that** actuation means (38) are associated with said driver's place (31) to make said driver's place (31) selectively assume at least a first position, in the substantial absence of a longitudinal inclination of the ground, and a second position, raised and inclined backwards with respect to said first position, in order to compensate any longitudinal inclination of the ground in the presence of a downward slope, and **in that** the passage of said driver's place (31) from said first position to said second position, and vice versa, determines a relative movement between said seat (32) and said footboard (34) to prevent the interference of said driver's place (31) with said containing structure (25).

2. Agricultural tractor as in claim 1, **characterized in that** said seat (32) and said footboard (34) are able to rotate, in relation to said containing structure (25), with respect to two corresponding fulcrums, or pivoting axes, (39, 41) parallel one to the other.

3. Agricultural tractor as in claim 2, **characterized in that** said seat (32) is fixed on a platform (33) pivoted in correspondence with a first fulcrum (39) of said two fulcrums, and **in that** said footboard (34) is associated with connection means (35) pivoted in correspondence with at least a second fulcrum (41) of said two fulcrums.

4. Agricultural tractor as in claim 3, **characterized in that** said connection means (35) comprises guides (42) for sliding means (37) associated with said platform (33) and able to allow the relative movement between said seat (32) and said footboard (34).

5. Agricultural tractor as in claim 3 or 4, **characterized in that** said connection means (35) comprises two arms disposed on opposite sides with respect to said seat (32).

6. Agricultural tractor as in any claim from 3 to 5, **characterized in that** said actuation means (38) comprises at least a fluid-dynamic piston constrained to said containing structure (25) and able to act either drawing or thrusting on said platform (33).

7. Agricultural tractor as in claims 4 and 6, **characterized in that** said sliding means (37) is able to cooperate with said guides (42) in order to transmit to said connecting arms (35) the drawing or thrusting action exerted by said fluid-dynamic piston (38).

8. Agricultural tractor as in any claim hereinbefore, **characterized in that** said actuation means (38) is driven automatically by command and control means, governed by inclination measuring means, able to determine the angle of rotation (α) to be assumed by said driver's place (31) according to the entity of said longitudinal inclination.

9. Agricultural tractor as in claim 1, **characterized in that** said angle of rotation (α) is comprised at least between 0° and 20°.

10. Agricultural tractor as in any claim hereinbefore, **characterized in that** it is of the transverse self-leveling type.

11. Agricultural tractor, able to operate on grounds with a longitudinal or transverse inclination with respect to its direction of travel, comprising a frame (11), associated with wheels (12, 13) and with a motor (15) connected to said wheels (12, 13), adjustment means (20, 21) able to act on at least some of said wheels (13), in order to maintain said frame (11) in a substantially horizontal position even in the presence of a transverse inclination of the ground, and at least a lifting unit (16, 17), connected with said frame (11) and provided with at least a support (43) associated with an attachment member (45) for work tools, **characterized in that** said attachment member (45) is mounted on rotating means (46), associated with said support (43) and with a substantially horizontal axis of rotation (x) in the absence of any longitudinal inclination of the ground, and **in that** displacement means (47), able to be selectively activated, are able to determine the rotation of said attachment member (45) with respect to said support (43), and around said axis of rotation (x), in the presence of any transverse inclination of the ground, in order to maintain said work tools substantially parallel to the ground.

12. Agricultural tractor as in claim 11, **characterized in that** said rotating means (46) comprise at least a fifth wheel.

13. Agricultural tractor as in claim 11 or 12, **characterized in that** said displacement means (47) is driven automatically by command and control means, governed by means to measure the inclination, able to determine the angle (β, -β) and the direction of rotation of said attachment member (45), with respect to the vertical plane (Z) passing through said axis of rotation (x), according to the entity and direction of said transverse inclination of the ground.

14. Agricultural tractor as in claim 13, **characterized in that** said angle (β, -β) can assume a value of at least up to +22° and -22°.

15. Agricultural tractor as in any claim from 11 to 14, **characterized in that** said displacement means (47) comprises at least a fluid-dynamic piston mounted in a misaligned position with respect to said rotating means (46) and able to operate either drawing or thrusting on said attachment member (45) in order to make said attachment member (45) selectively rotate in either one or the other direction.

16. Agricultural tractor as in any claim from 11 to 15, **characterized in that** said attachment member (45) has a substantially triangular conformation.

17. Agricultural tractor as in any claim from 11 to 16, **characterized in that** said rotating means (46) and said attachment member (45) are axially hollow.

18. Agricultural tractor as in claim 17, wherein said lifting unit (17) comprises motive power take-off means for said work tools, **characterized in that** said rotating means (46) and said attachment member (45) are disposed substantially in axis with said motive power take-off means.

19. Agricultural tractor as in any claim hereinbefore, wherein at least two wheels (13) are disposed on a same axis, **characterized in that** said two wheels (13) are associated with slider means (22) able to translate selectively in a transverse direction in order to vary the distance, or gauge, of said two wheels (13).

20. Agricultural tractor as in claim 19, **characterized in that** said slider means (22) is able to translate from a completely retracted position to a position of maximum extension in order to determine an increase in the distance between said two wheels (13) of at least 35% with respect to said completely retracted position.

## Patentansprüche

1. Landwirtschaftlicher Traktor, geeignet für den Betrieb auf Untergründen mit einer longitudinalen oder transversalen Neigung in Bezug auf seine Fortbewegungsrichtung, umfassend einen Rahmen (11) und einen Fahrerplatz (31) mit zumindest einem Sitz (32) und einem Trittbrett (34), angeordnet innerhalb einer auf dem Rahmen (11) montierten enthaltenden Struktur (25), **dadurch gekennzeichnet, dass** Betätigungsmittel (38) mit dem Fahrerplatz (31) verbunden sind, um den Fahrerplatz (31) selektiv zumindest eine erste Position, bei im Wesentlichen Fehlen einer longitudinalen Neigung des Untergrunds, und eine zweite Position, erhöht und nach hinten geneigt in Bezug auf die erste Position, einnehmen zu lassen, um eine beliebige longitudinale Neigung des Untergrunds bei Vorliegen eines Gefälles zu kompensieren, und dadurch, dass der Durchgang des Fahrerplatzes (31) von der ersten Position zu der zweiten Position und umgekehrt eine Relativbewegung zwischen dem Sitz (32) und dem Trittbrett (34) bestimmt, um ein gegenseitiges Stören des Fahrerplatzes (31) und der enthaltenden Struktur (25) zu verhindern.

2. Landwirtschaftlicher Traktor nach Anspruch 1, **dadurch gekennzeichnet, dass** der Sitz (32) und das Trittbrett (34) in der Lage sind, sich bezüglich der enthaltenden Struktur (25) in Bezug auf zwei korrespondierende zueinander parallele Drehachsen oder Schwenkachsen (39, 41) zu drehen.

3. Landwirtschaftlicher Traktor nach Anspruch 2, **dadurch gekennzeichnet, dass** der Sitz (32) auf einer Plattform (33) befestigt ist, drehbar gelagert in Übereinstimmung mit einer ersten Drehachse (39) der zwei Drehachsen, und dadurch, dass das Trittbrett (34) mit Verbindungsmitteln (35) verbunden ist, drehbar gelagert in Übereinstimmung mit zumindest einer zweiten Drehachse (41) der zwei Drehachsen.

4. Landwirtschaftlicher Traktor nach Anspruch 3, **dadurch gekennzeichnet, dass** die Verbindungsmittel (35) Führungen (42) für Gleitmittel (37) umfassen, verbunden mit der Plattform (33) und in der Lage, die Relativbewegung zwischen dem Sitz (32) und dem Trittbrett (34) zu erlauben.

5. Landwirtschaftlicher Traktor nach Anspruch 3 oder 4, **dadurch gekennzeichnet, dass** die Verbindungsmittel (35) zwei Arme umfassen, angeordnet an gegenüberliegenden Seiten in Bezug auf den Sitz (32).

6. Landwirtschaftlicher Traktor nach einem der Ansprüche 3 bis 5, **dadurch gekennzeichnet, dass** die Betätigungsmittel (38) zumindest einen fluid-dynamischen Kolben umfassen, beschränkt bezüglich der enthaltenden Struktur (25) und in der Lage, entweder ziehend oder schiebend auf die Plattform (33) zu wirken.

7. Landwirtschaftlicher Traktor nach den Ansprüchen 4 und 6, **dadurch gekennzeichnet, dass** die Gleitmittel (37) in der Lage sind, mit den Führungen (42) zusammenzuwirken, um an die Verbindungsarme (35) die ziehende oder schiebende Wirkung zu übertragen, die durch den fluid-dynamischen Kolben (38) ausgeübt wird.

8. Landwirtschaftlicher Traktor nach einem der vorherigen Ansprüche, **dadurch gekennzeichnet, dass** die Betätigungsmittel (38) automatisch durch Steuer- und Bedienmittel betrieben werden, gesteuert von einer Neigungsmessvorrichtung, die in der Lage ist, den Winkel der Drehung (α), der vom Fahrerplatz (31) anzunehmen ist, gemäß dem Wesen der longitudinalen Neigung zu bestimmen.

9. Landwirtschaftlicher Traktor nach Anspruch 1, **dadurch gekennzeichnet, dass** der Winkel der Drehung (α) zumindest zwischen 0° und 20° enthalten ist.

10. Landwirtschaftlicher Traktor nach einem der vorherigen Ansprüche, **dadurch gekennzeichnet, dass** er vom transversal selbst-nivellierenden Typ ist.

11. Landwirtschaftlicher Traktor, geeignet für den Betrieb auf Untergründen mit einer longitudinalen oder transversalen Neigung in Bezug auf seine Fortbewegungsrichtung, umfassend einen Rahmen (11), verbunden mit Rädern (12, 13) und mit einem Motor (15), verbunden mit den Rädern (12, 13), Einstellungsmittel (20, 21), die in der Lage sind, auf zumindest manche der Räder (13) zu wirken, um den Rahmen (11) in einer im Wesentlichen horizontalen Position sogar bei Vorliegen einer transversalen Neigung des Untergrunds zu halten, und zumindest eine Hebeeinheit (16, 17), verbunden mit dem Rahmen (11) und mit zumindest einem Träger (43) bereitgestellt, verbunden mit einem Befestigungselement (45) für Arbeitsgeräte, **dadurch gekennzeichnet, dass** das Befestigungselement (45) an Drehmitteln (46) montiert ist, verbunden mit dem Träger (43) und mit einer im Wesentlichen horizontalen Drehachse (x) bei Fehlen einer beliebigen longitudinalen Neigung des Untergrunds, und dadurch, dass Versetzungsmittel (47), die in der Lage sind selektiv aktiviert zu werden, in der Lage sind, die Drehung des Befestigungselements (45) in Bezug auf den Träger (43) und um die Drehachse (x) bei Vorliegen einer beliebigen transversalen Neigung des Untergrunds zu bestimmen, um die Arbeitsgeräte im Wesentlichen parallel zum Untergrund zu halten.

12. Landwirtschaftlicher Traktor nach Anspruch 11, **dadurch gekennzeichnet, dass** die Drehmittel (46) zumindest eine Sattelkupplung umfassen.

13. Landwirtschaftlicher Traktor nach Anspruch 11 oder 12, **dadurch gekennzeichnet, dass** die Versetzungsmittel (47) automatisch durch Steuer- und Bedienmittel betrieben werden, gesteuert durch Mittel zum Messen der Neigung, die in der Lage sind, den Winkel (β, -β) und die Richtung der Drehung des Befestigungselements (45) mit Bezug auf die vertikale Ebene (Z), die durch die Drehachse (x) passiert, gemäß dem Wesen und der Richtung der transversalen Neigung des Untergrunds zu bestimmen.

14. Landwirtschaftlicher Traktor nach Anspruch 13, **dadurch gekennzeichnet, dass** der Winkel (β, -β) einen Wert von zumindest bis zu +22° und -22° annehmen kann.

15. Landwirtschaftlicher Traktor nach einem der Ansprüche 11 bis 14, **dadurch gekennzeichnet, dass** die Versetzungsmittel (47) zumindest einen fluid-dynamischen Kolben umfassen, montiert in einer falsch ausgerichteten Position in Bezug auf die Drehmittel (46) und in der Lage, entweder ziehend oder schiebend auf das Befestigungselement (45) zu wirken, um das Befestigungselement (45) sich selektiv in entweder die eine oder die andere Richtung drehen zu lassen.

16. Landwirtschaftlicher Traktor nach einem der Ansprüche 11 bis 15, **dadurch gekennzeichnet, dass** das Befestigungselement (45) eine im Wesentlichen dreieckige Gestalt aufweist.

17. Landwirtschaftlicher Traktor nach einem der Ansprüche 11 bis 16, **dadurch gekennzeichnet, dass** die Drehmittel (46) und das Befestigungselement (45) axial hohl sind.

18. Landwirtschaftlicher Traktor nach Anspruch 17, wobei die Hebeeinheit (17) Antriebskraft-Hebemittel für die Arbeitsgeräte umfasst, **dadurch gekennzeichnet, dass** die Drehmittel (46) und das Befestigungselement (45) im Wesentlichen in Achse mit den Antriebskraft-Hebemitteln angeordnet sind.

19. Landwirtschaftlicher Traktor nach einem der vorherigen Ansprüche, wobei zumindest zwei Räder (13) auf derselben Achse angeordnet sind, **dadurch gekennzeichnet, dass** die zwei Räder (13) mit Gleitmitteln (22) verbunden sind, die in der Lage sind, selektiv in einer transversalen Richtung zu versetzen, um den Abstand oder die Spurweite der zwei Räder (13) zu variieren.

20. Landwirtschaftlicher Traktor nach Anspruch 19, **dadurch gekennzeichnet, dass** die Gleitmittel (22) in der Lage sind, von einer komplett eingefahrenen Position zu einer Position maximaler Erstreckung zu versetzen, um eine Zunahme im Abstand zwischen den zwei Rädern (13) von zumindest 35 % mit Bezug auf die komplett eingefahrene Position zu bestimmen.

## Revendications

1. Tracteur agricole capable d'opérer sur des terrains présentant une inclinaison longitudinale ou transversale par rapport au sens de la marche, comprenant un châssis (11) et une place du conducteur (31) comportant au moins un siège (32) et une planche de pieds (34) placés à l'intérieur d'une structure réceptrice (25) montée sur ledit châssis (11), **caractérisé en ce qu'**un moyen d'actionnement (38) est associé à ladite place du conducteur (31) pour permettre à celle-ci d'adopter sélectivement au moins une première position, en l'absence d'inclinaison longitudinale sensible du terrain, et une seconde position, relevée et inclinée vers l'arrière par rapport à ladite première position, destinée à compenser toute inclinaison longitudinale du terrain en présence d'une pente descendante, et **en ce que** le passage de ladite place du conducteur (31) de ladite première position à ladite seconde position, et vice-versa, définit un mouvement relatif entre ledit siège (32) et ladite planche de pieds (34) destiné à empêcher ladite place du conducteur (31) d'interférer avec ladite structure réceptrice (25).

2. Tracteur agricole selon la revendication 1, **caractérisé en ce que** ledit siège (32) et ladite planche de pieds (34) sont capables de pivoter, par rapport à ladite structure réceptrice (25), au niveau de deux points d'articulation correspondants, ou axes de rotation (39, 41) parallèles entre eux.

3. Tracteur agricole selon la revendication 2, **caractérisé en ce que** ledit siège (32) est fixé sur une plateforme (33) mobile en rotation au niveau d'un premier point d'articulation (39) desdits deux points d'articulation, et **en ce que** ladite planche de pieds (34) est associée à des moyens de liaison (35) mobiles en rotation au niveau d'au moins un second point d'articulation (41) desdits deux points d'articulation.

4. Tracteur agricole selon la revendication 3, **caractérisé en ce que** lesdits moyens de liaison (35) comprennent des guides (42) pour des moyens coulissants (37) associés à ladite plateforme (33), et aptes à permettre le mouvement relatif entre ledit siège (32) et ladite planche de pieds (34).

5. Tracteur agricole selon la revendication 3 ou 4, **caractérisé en ce que** lesdits moyens de liaison (35) comprennent deux bras placés de chaque côté dudit siège (32).

6. Tracteur agricole selon l'une quelconque des revendications 3 à 5, **caractérisé en ce que** ledit moyen d'actionnement (38) comprend au moins un vérin hydraulique contraint à ladite structure réceptrice (25) et capable d'agir en tirant ou en poussant sur ladite plateforme (33).

7. Tracteur agricole selon les revendications 4 et 6, **caractérisé en ce que** lesdits moyens coulissants (37) sont capables de coopérer avec lesdits guides (42) afin de transmettre auxdits bras de liaison (35) l'action de traction ou de poussée exercée par ledit vérin hydraulique (38).

8. Tracteur agricole selon l'une quelconque des revendications précédentes, **caractérisé en ce que** ledit moyen d'actionnement (38) est entraîné automatiquement par un moyen de commande et de contrôle, régi par un moyen de mesure d'inclinaison, capable de déterminer l'angle de rotation (α) que doit adopter ladite place du conducteur (31) en fonction de la nature de ladite inclinaison longitudinale.

9. Tracteur agricole selon la revendication 1, **caractérisé en ce que** ledit angle de rotation (α) est au moins compris entre 0° et 20°.

10. Tracteur agricole selon l'une quelconque des revendications précédentes, **caractérisé en ce qu'**il est du type à compensateur automatique d'assiette transversale.

11. Tracteur agricole capable d'opérer sur des terrains présentant une inclinaison longitudinale ou transversale par rapport au sens de la marche, comprenant un châssis (11) associé à des roues (12, 13) et à un moteur (15) relié auxdites roues (12, 13), des moyens d'ajustement (20, 21), capables d'agir sur certaines au moins desdites roues (13) afin de maintenir ledit châssis (11) en position sensiblement horizontale, même en présence d'une inclinaison transversale du terrain, et au moins une unité de levage (16, 17) reliée audit châssis (11) et munie d'au moins un support (43) associé à un élément de fixation (45) d'outils de travail, **caractérisé en ce que** ledit élément de fixation (45) est monté sur un moyen tournant (46), associé audit support (43) et dont l'axe de rotation (x) est sensiblement horizontal en l'absence de toute inclinaison longitudinale du terrain, et **en ce que** des moyens de déplacement (47), pouvant être actionnés sélectivement, sont capables de déterminer la rotation dudit élément de fixation (45) par rapport audit support (43) et autour dudit axe de rotation (x), en présence de toute inclinaison transversale du terrain, afin de maintenir lesdits outils de travail en position sensiblement parallèle au terrain.

12. Tracteur agricole selon la revendication 11, **caractérisé en ce que** ledit moyen tournant (46) comprend au moins une cinquième roue.

13. Tracteur agricole selon la revendication 11 ou 12, **caractérisé en ce que** ledit moyen de déplacement (47) est entraîné automatiquement par un moyen de commande et de contrôle régi par un moyen de mesure de l'inclinaison, capable de déterminer l'angle (β, -β) ) et le sens de rotation dudit élément de fixation (45) par rapport au plan vertical (Z) passant par ledit axe de rotation (x), selon la nature et le sens de ladite inclinaison transversale du terrain.

14. Tracteur agricole selon la revendication 13, **caractérisé en ce que** la valeur dudit angle de rotation (β, -β) peut au moins aller jusqu'à +22° et -22°.

15. Tracteur agricole selon l'une quelconque des revendications 11 à 14, **caractérisé en ce que** ledit moyen de déplacement (47) comprend au moins un vérin hydraulique monté dans un alignement différent de celui dudit moyen tournant (46), et capable d'opérer en tirant ou en poussant sur ledit élément de fixation (45) afin de le faire tourner sélectivement dans un sens ou dans l'autre.

16. Tracteur agricole selon l'une quelconque des revendications 11 à 15, **caractérisé en ce que** ledit élément de fixation (45) est de forme sensiblement triangulaire.

17. Tracteur agricole selon l'une quelconque des revendications 11 à 16, **caractérisé en ce que** ledit moyen tournant (46) et ledit élément de fixation (45) possèdent un axe creux.

18. Tracteur agricole selon la revendication 17, dans lequel ladite unité de levage (17) comprend un moyen de prise de force motrice pour lesdits outils de travail, **caractérisé en ce que** ledit moyen tournant (46) et ledit moyen de fixation (45) sont placés sensiblement dans l'axe dudit moyen de prise de force motrice.

19. Tracteur agricole selon l'une quelconque des revendications précédentes, dans lequel deux roues au moins (13) sont placées sur un même axe, **caractérisé en ce que** lesdites deux roues (13) sont associées à des moyens coulissants (22) capables de se déplacer sélectivement en translation transversale afin de faire varier la distance, ou voie, desdites deux roues (13).

20. Tracteur agricole selon la revendication 19, **caractérisé en ce que** lesdits moyens coulissants (22) sont capables de se déplacer en translation d'une position de retrait complet à une position d'extension maximale afin d'augmenter la distance entre lesdits deux roues (13) d'au moins 35 % par rapport à ladite position de retrait complet.
